# FASCICULE DE BREVET EUROPEEN

(11) **EP 0 721 291 B1**
(45) Date de publication et mention de la délivrance du brevet: **27.03.2002**
(21) Numéro de dépôt: 96400004.6
(22) Date de dépôt: 02.01.1996
(51) Int. Cl.: H04Q 7/38

(54) **Procédé et système pour réduire la durée d'une phase de rattachement d'un mobile à une station de base d'un réseau cellulaire de radiocommunications**
Verfahren und System zur Verkürzung der Anschlusszeit einer Mobileinheit an eine Basisstation eines zellularen Funkübertragungsnetzwerkes
Method and system for reducing the mobile reconnecting time to a base station of a cellular radio-communication network

(30) Priorité: 05.01.1995 FR 9500068
(43) Date de publication de la demande: 10.07.1996
(73) Titulaire: ALCATEL, 75382 Paris Cédex 08 (FR)
(72) Inventeur: Pinault, Francis, F-92270 Bois Colombes (FR); Jouin, Christophe, F-75015 Paris (FR)
(74) Mandataire: Lamoureux, Bernard

(56) Documents cités:
- DE-A- 3 200 965
- MOULY ET AL.: "GSM System for Mobile Communivations" , EUROPE MEDIA , 1993 XP002001066 * page 456, ligne 1 - page 458, ligne 4 *

## Description

La présente invention concerne de manière générale des procédé et système pour réduire la durée d'une phase de rattachement d'un mobile à une station de base d'un réseau cellulaire de radiocommunications, typiquement en réponse à une mise sous tension ou une réinitialisation du mobile.

Dans un réseau cellulaire de radiocommunications avec les mobiles, de type G.S.M (Global System for Mobile Communications) ou DCS-1800, un mobile mesure, par exemple en réponse à sa mise sous tension, un niveau de réception, typiquement de puissance, pour chaque fréquence du spectre existant dans le réseau de radiocommunications considéré. Dans un réseau G.S.M, il existe 124 fréquences possibles, et dans un réseau DCS-1800, ces fréquences sont au nombre de 374. Chaque cellule, ou station de base correspondante, d'un tel réseau est associée à une fréquence balise. Cette fréquence balise est émise en continu et véhicule en mode AMRT sur un intervalle temporel particulier, dit intervalle utile, typiquement de rang 0, dans la trame descendante, émise à partir d'une station de base de cellule vers des mobiles, des données diverses et notamment des données de synchronisation et des données d'identification de réseau d'abonnement, ou données PLMN. Différents réseaux d'abonnement coexistent sur un même territoire, et constituent des sous-réseaux d'un même réseau de radiocommunications, tel que réseau de radiocommunications G.S.M. Un usager donné s'abonne à un de ces réseaux d'abonnement, désigné par "home PLMN" en terminologie G.S.M. Les différents réseaux d'abonnement sont gérés par des opérateurs particuliers respectifs auxquels sont allouées des bandes de fréquence données.

Selon une première technique connue de rattachement d'un mobile à une station de base, par exemple en réponse à la mise sous tension du mobile, ce dernier entreprend initialement une mesure de niveau de réception pour chaque fréquence balise possible dans le spectre associé au réseau de radiocommunications considéré, puis, ensuite, par ordre décroissant de niveau de réception, la synchronisation sur l'intervalle temporel utile en vue de recevoir les données PLMN véhiculées par cette fréquence balise, et ainsi identifier le réseau d'abonnement auquel appartient la cellule générant cette fréquence balise dans le réseau de radiocommunications considéré. Ces opérations sont entreprises par le mobile dans l'objectif de se rattacher à une station de base qui satisfait aux deux conditions suivantes : la station appartient au réseau d'abonnement de l'usager d'une part, et génère une fréquence balise qui est reçue par le mobile avec un niveau de réception élevé d'autre part.

Selon une seconde technique connue et introduite dans l'ouvrage "The G.S.M System for Mobile Communications" produit et publié par M. MOULY et M.B PAUTET, Edition 1992, pages 457-458, --Cell Selection at Switch-On Time-- et page 464, il est proposé de mettre à profit la caractéristique selon laquelle un mobile mis hors tension à un endroit donné, peut être remis sous tension à ce même endroit donné. Cette seconde technique prévoit de stocker périodiquement dans une mémoire permanente du mobile, lorsque le mobile est activé et rattaché à une station de base, une liste de fréquences balises du réseau d'abonnement de l'usager qui sont émises par des stations de base respectives appartenant à une zone géographique dans laquelle est inclus le mobile. La mémoire permanente est typiquement une mémoire de la carte, ou support amovible, SIM (Subscriber Identity Module en terminologie anglo-saxonne), et la liste des fréquences balises est une liste diffusée par le réseau d'abonnnement de l'usager. Cette liste, véhiculée par la fréquence balise de la station de base à laquelle est rattaché le mobile, indique les fréquences balises produites par des stations de base du réseau d'abonnement qui sont voisines de ladite station de base à laquelle est rattaché le mobile. Selon cette technique, lors d'une phase de rattachement, par exemple en réponse à sa mise sous tension, le mobile est susceptible de mettre en oeuvre deux procédures successives.

Selon une première procédure, le mobile classe, par ordre décroissant de niveau de réception, les fréquences balises de la liste des fréquences balises mémorisée dans la carte SIM, en utilisant des mesures de niveau de réception effectuées tout à fait initialement par le mobile pour chaque fréquence du spectre, en réponse à sa mise sous tension. Pour chaque fréquence balise de la liste des fréquences balises, et par ordre décroissant de niveau de réception, le mobile se synchronise itérativement sur chacune d'elles, jusqu'à réception d'informations PLMN identifiant le réseau d'abonnement de l'usager, sur des données véhiculées par chacune des fréquences de la liste, en vue de recevoir les données PLMN. Cette première procédure conduit à une réduction du délai de rattachement du mobile au réseau, dans la mesure où le mobile n'a pas été déplacé sensiblement entre un instant de mise hors tension et un instant ultérieur de mise sous tension. Dans ce cas en effet, la limitation du nombre de fréquences balises mémorisées dans la liste, comparativement au nombre total de fréquences balises dans le réseau de radiocommunications, réduit sensiblement la durée de rattachement du mobile. Dans le cas inverse, la synchronisation du mobile est imparfaite et devra être réitéreé. Une synchronisation est parfaite si elle est obtenue avec une station de base du réseau d'abonnement qui est la plus proche du mobile.

Dans le cas où cette première procédure ne peut aboutir au rattachement du mobile avec une station de base appartenant au réseau d'abonnement de l'usager, et générant une fréquence balise ayant un niveau de réception suffisant par le mobile, alors une seconde procédure reprenant la première technique connue est mise en oeuvre. Elle consiste pour chacune de l'ensemble des fréquences balises possibles du spectre dans le réseau de radiocommunications, par ordre décroissant de niveau de réception, en la synchronisation sur l'intervalle temporel utile en vue de recevoir les informations PLMN et ainsi identifier le réseau d'abonnement auquel appartient la cellule générant cette fréquence balise.

Ainsi, la réduction de la durée de rattachement du mobile à une station de base du réseau d'abonnement de l'usager, résultant de l'utilisation d'une liste limitée de fréquences balises parmi toutes les fréquences du spectre, n'est effective que si le mobile n'a pas été déplacé sensiblement entre deux instants successifs respectifs de mise hors tension et mise sous tension. Dans le cas inverse, si le mobile a été déplacé, il apparaît alors que la première procédure basée sur l'utilisation d'une liste limitée de fréquences balises tel que décrit ci-dessus, requiert un délai qui retarde la durée de rattachement du mobile à une station de base, par comparaison avec une mise en oeuvre directe et immédiate d'une tentative de synchronisation sur toutes les fréquences du spectre, telle que décrite dans la première technique.

L'invention vise à remédier à l'inconvénient précité en fournissant des procédés et systèmes pour réduire la durée de la phase de rattachement d'un mobile à une station de base d'un réseau cellulaire de radiocommunications, par exemple en réponse à une mise sous tension de ce mobile. De tels procédés et systèmes réduisent la durée de rattachement du mobile à une station de base du réseau, notamment lorsque le mobile s'est déplacé entre un instant de mise hors tension et un instant ultérieur de mise sous tension.

A cette fin, selon une première variante, un procédé pour réduire la durée d'une phase de rattachement d'un mobile à une station de base d'un réseau d'abonnement constituant un sous-réseau d'un réseau de radiocommunications, ledit procédé comprend
(a1)- le stockage d'une première liste de fréquences balises qui sont émises par des stations de base respectives du réseau d'abonnement et appartiennent à une zone géographique dans laquelle est inclus le mobile, et
(b1)- lors de la phase de rattachement, la mesure par le mobile d'un premier niveau de réception respectif pour chacune des fréquences balises définie dans le réseau de radiocommunications.

Ce procédé est caractérisé selon l'invention en ce qu'il comprend, en outre,
(a2)- le stockage d'une seconde liste de fréquences balises et de seconds niveaux de réception respectivement associés auxdites fréquences balises de cette seconde liste et mesurés par le mobile, les seconds niveaux correspondant à des niveaux de puissance maximaux de réception par le mobile, et
(b2)- lors de la phase de rattachement, la comparaison desdits premier et second niveaux de réception pour chacune des fréquences balises de la seconde liste, et de laquelle comparaison il résulte l'une des deux alternatives suivantes:
   si pour chacune des fréquences balises de la seconde liste, les premier et second niveaux de réception sont sensiblement identiques, la synchronisation du mobile sur la fréquence balise de la première liste qui a le premier niveau de réception qui est le plus élevé,
   si pour au moins l'une desdites fréquences balises de la seconde liste, lesdits premier et second niveaux de réception sont sensiblement différents, la synchronisation du mobile sur chacune des fréquences balises parmi toutes les fréquences balises définies dans le réseau de radiocommunications, par ordre décroissant de premier niveau de réception, jusqu'à réception par le mobile de données véhiculées par l'une des fréquences balises parmi toutes les fréquences balises définies dans ledit réseau de radiocommunications, qui identifient ladite une des fréquences balises comme étant générée par une station de base dudit réseau d'abonnement donné.

Typiquement, la première liste de fréquences balises, émises par des stations de base respectives appartenant à une zone géographique dans laquelle est inclus le mobile, est diffusée périodiquement par le réseau d'abonnement et reçue par le mobile lorsqu'il est rattaché une station de base de ce réseau d'abonnement.

Selon une réalisation préférée, la première liste est stockée dans une mémoire d'un support amovible enfichable dans le mobile, et la seconde liste est stockée dans une mémoire de type à accès aléatoire qui est incluse dans le mobile et qui est maintenue activée même lorsque le mobile est mis hors tension.

Un mobile pour la mise en oeuvre du procédé est également fourni. Il comprend une chaîne de traitement d'émission / réception pour mesurer des niveaux de réception respectifs pour des fréquences balises reçues, et une mémoire pour stocker les premiers niveaux de réception respectifs des fréquences balises définies dans ledit réseau de radiocommunications. Il est caractérisé en ce qu'il comprend:
- un comparateur pour comparer lesdits premier et second niveaux de réception pour chacune desdites fréquences balises de la seconde liste, lesdits seconds niveaux de réception respectifs pour lesdites fréquences balises de la seconde liste étant stockés dans une mémoire permanente dudit mobile, et
- des moyens dans ladite chaîne pour
   synchroniser le mobile sur la fréquence balise de la première liste qui est associée à celui des premiers niveaux de réception qui est le plus élevé, si pour chacune desdites fréquences balises de la seconde liste, lesdits premier et second niveaux de réception sont sensiblement identiques, et
   synchroniser le mobile sur chacune des fréquences balises parmi toutes les fréquences balises définies dans ledit réseau de radiocommunications, par ordre décroissant de premier niveau de réception, jusqu'à réception par le mobile de données véhiculées par l'une desdites fréquences balises parmi toutes les fréquences balises définies dans ledit réseau de radiocommunications, qui identifient ladite une des fréquences balises comme étant générée par une station de base dudit réseau d'abonnement donné, si pour au moins l'une desdites fréquences balises de la seconde liste, lesdits premier et second niveaux de réception sont sensiblement différents.

Selon une seconde variante, un procédé pour réduire la durée d'une phase de rattachement d'un mobile à une station de base d'un réseau d'abonnement constituant un sous-réseau d'un réseau de radiocommunications, ledit procédé comprenant:
- lors de la phase de rattachement, la mesure par le mobile d'un premier niveau de réception respectif pour chacune des fréquences balises définie dans ledit réseau de radiocommunications,
est caractérisé en ce qu'il comprend, en outre,
- le stockage d'une liste de fréquences balises chacune associée à un second niveau de réception mesuré par le mobile respectif et à une information de synchronisation respective, lesdits seconds niveaux correspondant à des niveaux de puissance maximaux de réception par le mobile, et
- lors de la phase de rattachement, la comparaison desdits premier et second niveaux de réception pour chacune desdites fréquences balises de la liste, et de laquelle comparaison il résulte l'une des deux alternatives suivantes:
   si pour chacune desdites fréquences balises de la liste, lesdits premier et second niveaux de réception sont sensiblement identiques, la synchronisation du mobile sur la fréquence balise de la liste qui a le niveau réception qui est le plus élevé, en fonction de l'information de synchronisation associée à cette fréquence balise de la première liste qui a le niveau réception qui est le plus élevé, et si pour au moins l'une desdites fréquences balises de la liste, lesdits premier et second niveaux de réception sont sensiblement différents, la synchronisation du mobile sur chacune des fréquences balises parmi toutes les fréquences balises définies dans ledit réseau de radiocommunications, par ordre décroissant de premier niveau de réception, jusqu'à réception par le mobile de données véhiculées par l'une desdites fréquences balises parmi toutes les fréquences balises définies dans ledit réseau de radiocommunications, qui identifient ladite une des fréquences balises comme étant générée par une station de base dudit réseau d'abonnement donné.

D'autres caractéristiques et avantages de la présente invention apparaîtront plus clairement à la lecture de la description suivante, en référence aux dessins annexés correspondants, dans lesquels :
- la figure 1 représente un mobile de radiocommunications et un module d'identification d'abonné associé qui est destiné à mémoriser une première liste de fréquences balises ;
- la figure 2 est un bloc diagramme d'une première variante d'un système selon l'invention pour réduire la durée de la phase de rattachement d'un mobile à une station de base; et
- la figure 3 est un bloc diagramme d'une seconde variante d'un système selon l'invention pour réduire la durée de la phase de rattachement d'un mobile à une station de base.

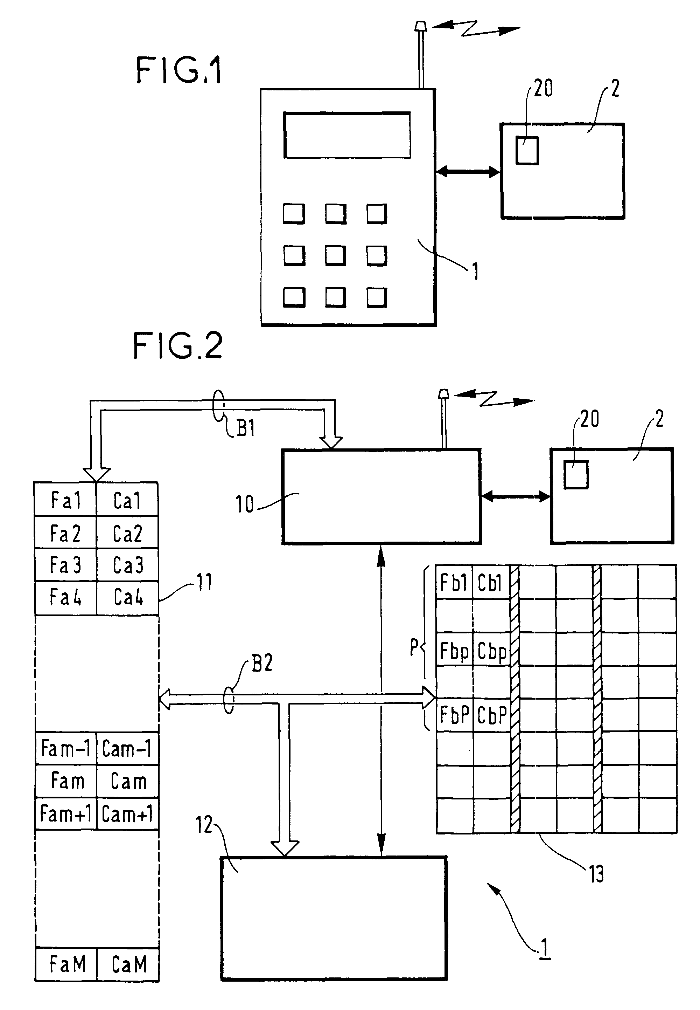

En référence à la figure 1, un mobile 1 dans un réseau de radiocommunications avec les mobiles de type G.S.M, est utilisé en association avec un module d'identité d'abonné, ou carte SIM, 2. Ce module 2 comprend une mémoire 20 destinée à stocker divers types d'informations, telles qu'informations utiles à la configuration du mobile 1. Ce module 2 est typiquement enfichable dans une fente prévue à cet effet dans le mobile 1 de sorte que des informations puissent être lues et stockées dans la mémoire 20 par un circuit de lecture/écriture inclus dans le mobile 1. Lorsque le mobile 1 est sous tension, en mode de fonctionnement normal, une première liste de fréquences balises est mise à jour périodiquement par le mobile 1 dans une zone de la mémoire 20. A un instant donné, cette première liste est formée des fréquences balises du réseau d'abonnement de l'usager qui sont émises par des stations de base respectives appartenant à une zone géographique dans laquelle est inclus le mobile à cet instant. Cette première liste varie en fonction du déplacement du mobile lorsqu'il est sous tension, et est mise à jour à chaque fois à partir d'un message particulier diffusé par la station de base à laquelle est rattaché le mobile 1. Une telle liste de fréquences balises est définie typiquement par l'ensemble des fréquences balises de la zone de localisation du mobile, ou "location area" en terminologie G.S.M.

La mémoire 20 de la carte SIM étant une mémoire permanente, lorsque le mobile 1 est mis hors tension ou réinitialisé, la liste limitée de fréquences qui est stockée dans cette mémoire 20 et qui contient les fréquences balises émises par des stations de base respectives dans le voisinage du mobile 1 au moment de sa mise hors tension, est sauvegardée. Selon la technique antérieure, lorsque ultérieurement le mobile 1 est remis sous tension, il effectue initialement des mesures de niveau de réception pour chaque fréquence du spectre du réseau de radiocommunications, tel que GSM ou DCS-1800. Puis le mobile classe, par ordre décroissant de niveau de réception, toutes les fréquences balises de la première liste de fréquences balises mémorisée dans la carte SIM en utilisant ces mesures de niveau de réception initiales. Pour chaque fréquence balise de la première liste des fréquences balises ayant un niveau de réception suffisant, et par ordre décroissant de niveau de réception, le mobile se synchronise itérativement, jusqu'à réception d'informations PLMN identifiant le réseau d'abonnement de l'usager, sur des données véhiculées par chacune des fréquences de la liste, en vue de recevoir des informations PLMN. Dans le cas où la procédure qui précède ne peut aboutir au rattachement du mobile à une station de base appartenant au réseau d'abonnement de l'usager, alors le mobile se synchronise itérativement, jusqu'à réception d'informations PLMN identifiant le réseau d'abonnement de l'usager, sur des données véhiculées par chacune des fréquences possibles du spectre en utilisant également les mesures de niveau de réception initiales. Pour cela, pour chacune de l'ensemble des fréquences balises possibles du spectre, par ordre décroissant de niveau de réception, le mobile se synchronise sur l'intervalle temporel utile en vue de recevoir les données PLMN et ainsi identifier le réseau auquel appartient la cellule générant cette fréquence balise.

En résultat de sa mise sous tension, la tentative par le mobile 1 de se synchroniser sur des données véhiculées par les fréquences appartenant à la liste des fréquences balises dans la carte SIM, peut induire une perte inutile de temps de rattachement du mobile 1 à une station de base dans le cas où le mobile 1 a été déplacé entre sa mise hors tension et sa mise sous tension.

En référence à la figure 2, un système pour la mise en oeuvre du procédé selon l'invention, inclus dans le mobile 1, comprend de manière conventionnelle une chaîne de traitement d'émission/réception 10, une mémoire 11 destinée à stocker un répertoire (Fam, Cam), m compris entre 1 et M (M = 124 en G.S.M et M = 374 en DCS-1800), de toutes les fréquences Fam du spectre du réseau de radiocommunications considéré, et leurs niveaux de réception associés respectifs Cam mesurés lors de la mise sous tension du mobile 1. La mesure d'un niveau de réception d'une fréquence balise est effectuée par la chaîne 10. Selon l'invention, le système inclut, en outre, un comparateur 12 et une mémoire 13 destinée à stocker une seconde liste de P fréquences balises et leurs niveaux de réception associés respectifs mesurés par le mobile 1. Selon l'invention, comme pour la première liste des fréquences balises mémorisée dans la carte SIM, la seconde liste est mise à jour périodiquement par le mobile 1 dans une zone de la mémoire 13, alors que le mobile est allumé et en mode de fonctionnement normal. A un instant donné, cette seconde liste est formée de fréquences balises Fbp, et niveaux de réception respectifs associés Cbp, qui sont émises par des stations de base respectives du réseau, et reçues par le mobile 1 avec des niveaux de réception élevés. En pratique, le nombre P de fréquences balises de la seconde liste a une faible valeur, par exemple égal à 6, par rapport au nombre de fréquences balises dans la première liste qui est typiquement égal à 32. Cette seconde liste varie en fonction du déplacement du mobile, et est mise à jour par le mobile lui même en résultat de l'écoute des fréquences balises émises par des stations de base voisines à la station de base de rattachement courante. Cette seconde liste inclut en outre la fréquence balise, et le niveau de réception associé, émise par la station de base courante à laquelle le mobile est rattaché. La mémoire 13 est une zone de mémoire à accès aléatoire RAM qui est maintenue alimentée même lorsque le mobile 1 est mis hors tension, permettant ainsi de sauvegarder la seconde liste des fréquences balises et niveaux de réception respectifs associés.

Lorsque le mobile 1 est mis sous tension ou réinitialisé, la chaîne 10 mesure, pour chacune des fréquences balises. du spectre du réseau de radiocommunications, un niveau de réception respectif. Les résultats de ces mesures sont stockés, à travers un bus B1, par la chaîne de traitement d'émission/réception 10 dans la mémoire 11 sous la forme d'un répertoire de toutes les fréquences balises possibles du spectre, et de leurs niveaux de réception associés respectifs. Le comparateur 12 est relié à la mémoire 11 et à la mémoire 13 à travers un bus B2. Pour l'ensemble des P fréquences Fbp de la seconde liste, qui constitue un sous-ensemble de la totalité des M fréquences du spectre, le comparateur 12 compare, pour chacune des P fréquences balises de la seconde liste, le niveau de réception, ou premier niveau de réception, Cam mesuré par le mobile 1 en réponse à sa mise sous tension et stocké dans le répertoire 11, et le niveau de réception, ou second niveau de réception, Cbp correspondant à cette fréquence du spectre dans la seconde liste et mesuré par le mobile 1 préalablement à sa mise hors tension lorsqu'il est en mode de fonctionnement normal. En réponse à cette comparaison, deux alternatives sont possibles. Une liaison relie la chaîne 10 au comparateur 12 pour permettre un échange de données de contrôle entre eux.

Si pour au moins l'une des fréquences balises de la seconde liste, les premier et second niveaux de réception sont sensiblement différents, le mobile 1 se synchronise sur chacune des fréquences balises parmi toutes les fréquences balises définies dans ledit réseau, par ordre croissant de premier niveau de réception, jusqu'à réception par le mobile de données véhiculées par l'une des fréquences balises, qui identifient cette fréquence balise comme étant générée par une station de base du réseau d'abonnement de l'usager.

Si pour chacune des fréquences balises de la seconde liste, les premier et second niveaux de réception sont sensiblement identiques, le mobile se synchronise sur la fréquence balise de la première liste qui est associée à celui des premiers niveaux de réception mesurés qui est le plus élevé. Cette fréquence balise est nécessairement la fréquence balise réellement reçue avec le niveau le plus élevé par le mobile en réponse à sa mise sous tension sachant que le mobile n'a pas été déplacé depuis sa mise hors tension.

La liaison reliant la chaîne 10 au comparateur 12 permet au comparateur 12 de commander des moyens de synchronisation dans la chaîne 10, en fonction des résultats de comparaison.

Lorsque les premier et second niveaux de réception sont sensiblement identiques pour chacune des P fréquences balises de la seconde liste, il y a une très forte probabilité que le mobile n'ait pas été déplacé entre sa mise hors tension et sa mise sous tension. L'utilisation de la première liste mémorisée dans la mémoire de carte SIM 2 offrira alors un gain de temps pour le rattachement du mobile 1 à une station de base.

Lorsque les premier et second niveaux de réception sont sensiblement différents pour au moins l'une des fréquences balises de la seconde liste, il peut être déduit que le mobile a été déplacé entre sa mise hors tension et sa mise sous tension ultérieure. Dans ce cas, l'utilisation de la première liste mémorisée dans la mémoire de carte SIM 2 n'apparaît pas optimale sachant qu'une telle utilisation conduit à une forte probabilité de perte de temps pour le rattachement du mobile à une station de base. En effet, le mobile a été déplacé entre sa mise hors tension et sa mise sous tension, et la durée des traitements, tels que classification des fréquences selon les niveaux de réception, pour toutes les fréquences balises de la première liste mémorisée dans la carte SIM peut allonger inutilement cette durée de rattachement du mobile au réseau. Il doit être rappelé que le nombre des fréquences balises de la seconde liste est très inférieur au nombre des fréquences balises de la première liste.

Par ailleurs, il doit être noté que, selon l'invention, des premier et second niveaux de réception sont sensiblement différents, respectivement identiques, s'ils diffèrent entre eux de sorte que le plus élevé de ces niveaux soit supérieur par rapport au plus faible de ces niveaux d'un pourcentage au moins, respectivement au plus, égal à un pourcentage seuil. Ce pourcentage seuil prend, à titre d'exemple, l'une des valeurs comprises entre 10% et 30 %.

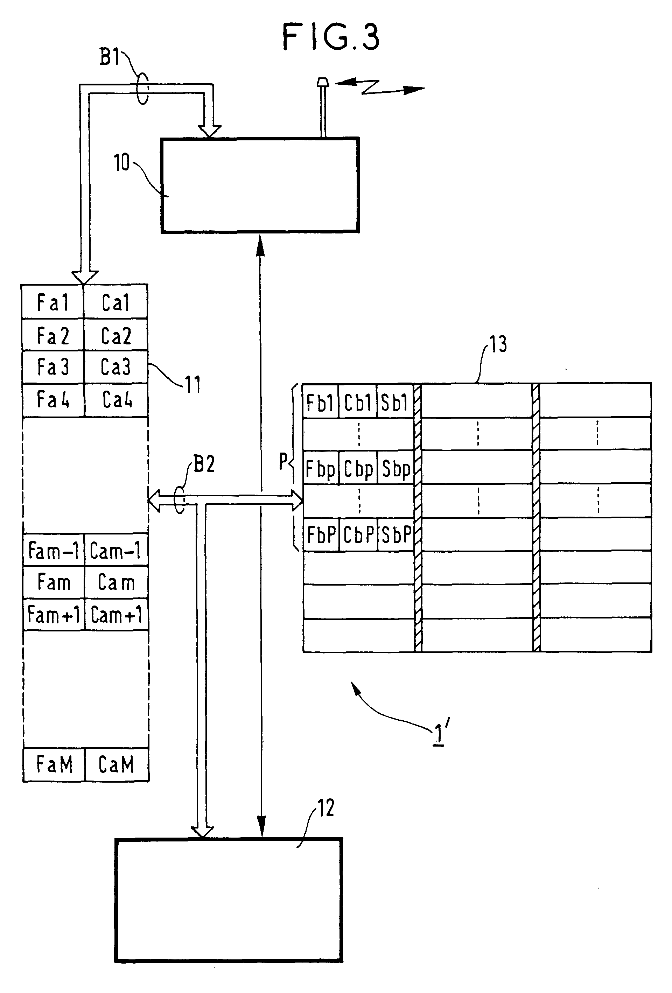

En variante de la figure 2, la figure 3 propose un système 1' pour une mise en oeuvre avantageuse de l'invention. Le système comprend la chaîne de traitement d'émission/réception 10, la mémoire 11 destinée à stocker un répertoire (Fam, Cam, ), m compris entre 1 et M (M = 124 en G.S.M et M = 374 en DCS-1800), de toutes les fréquences Fam du spectre du réseau de radiocommunications considéré, et leurs niveaux de réception associés respectifs Cam mesurés lors de la mise sous tension du mobile 1, le comparateur 12 et la mémoire 13. Cette mémoire 13 est destinée selon cette variante à stocker une liste de P fréquences balises Fbp, chacune associée, d'une part, à un niveau de réception Cbp mesuré par le mobile et, d'autre part, à une information de synchronisation Sbp, p variant entre 1 et P. Tous ces circuits 10, 11, 12 et 13 sont identiques et agencés de la même manière que dans la figure 2. Une liaison reliant la chaîne 10 au comparateur 12 permet au comparateur 12 de commander des moyens de synchronisation dans la chaîne 10, en fonction de résultats de comparaison. Cette variante ne fait pas usage de la carte SIM à des fins de mise en oeuvre de l'invention.

Comme dans la variante de la figure 2, le nombre P de fréquences balises dans la liste de la mémoire 13 a une faible valeur, par exemple égal à 6. Cette liste varie en fonction du déplacement du mobile lorsqu'il est sous tension, et est mise à jour par le mobile lui-même en résultat de l'écoute des fréquences balises émises par des stations de base voisines à la station de base de rattachement courante. Elle inclut en outre la fréquence balise émise par la station de base courante à laquelle le mobile est rattaché, ainsi que le niveau de réception et l'information de synchronisation associés. La mémoire 13 est une zone de mémoire à accès aléatoire RAM qui est maintenue alimentée même lorsque le mobile 1 est mis hors tension, permettant ainsi de maintenir sauvegardée la liste des fréquences balises dans la mémoire 13, ainsi que les niveaux de réception et informations de synchronisation respectivement associés à ces fréquences balises.

Lorsque le mobile 1 est mis sous tension ou réinitialisé, la chaîne 10 mesure, pour chacune des fréquences balises du spectre du réseau de radiocommunications, un niveau de réception respectif. Les résultats de ces mesures sont stockés, à travers le bus B1, par la chaîne de traitement d'émission/réception 10 dans la mémoire 11 sous la forme d'un répertoire de toutes les fréquences balises possibles du spectre, et de leurs niveaux de réception associés respectifs. Le comparateur 12 est relié à la mémoire 11 et à la mémoire 13 à travers un bus B2. Pour l'ensemble des P fréquences Fbp de la liste de la mémoire 13, qui constitue un sous-ensemble de la totalité des M fréquences du spectre, le comparateur 12 compare, pour chacune des P fréquences balises de cette liste, le niveau de réception, ou premier niveau de réception, Cam mesuré par le mobile 1 en réponse à sa mise sous tension et stocké dans le répertoire 11, et le niveau de réception, ou second niveau de réception, Cbp correspondant à cette fréquence du spectre dans la liste et mesuré par le mobile 1 préalablement à sa mise hors tension lorsqu'il est en mode de fonctionnement normal. En réponse à cette comparaison, deux alternatives sont possibles.

Si pour au moins l'une des fréquences balises Fbp de la liste, les premier et second niveaux de réception sont sensiblement différents, le mobile 1 se synchronise sur chacune des fréquences balises parmi toutes les fréquences balises définies dans ledit réseau de radiocommunications, par ordre croissant de premier niveau de réception, jusqu'à réception par le mobile de données véhiculées par l'une des fréquences balises, qui identifient cette fréquence balise comme étant générée par une station de base du réseau d'abonnement de l'usager.

Si pour chacune des fréquences balises de la liste, les premier et second niveaux de réception sont sensiblement identiques, le mobile se synchronise sur la fréquence balise Fbp, p compris entre 1 et P, de la liste qui est associée à celui des premiers niveaux de réception mesurés qui est le plus élevé. Cette fréquence balise est nécessairement la fréquence balise réellement reçue avec le niveau le plus élevé par le mobile en réponse à sa mise sous tension sachant que le mobile n'a pas été déplacé depuis sa mise hors tension. Une optimisation de la synchronisation du mobile sur la fréquence balise Fbp est obtenue à partir de l'information de synchronisation Sbp associée à cette fréquence Fbp. Selon un exemple, cette information Sbp consiste en une information d'identité de station de base BSIC (Base Station Identity Code en terminologie G.S.M). Cette information BSIC, véhiculée de manière conventionnelle dans un canal de synchronisation temporelle, dit SCH, émis par chaque station de base est utilisée selon la technique antérieure par un mobile pour opérer une discrimination entre plusieurs stations de base émettant dans une zone géographique de faible dimension des fréquences balises respectives correspondant à une même fréquence. Selon l'invention, une information Sbp est mémorisée dans la liste de la mémoire 13 en association avec une fréquence respective Fbp de la liste, et est utilisée pour accélèrer la phase de synchronisation du mobile en offrant une sélection rapide par le mobile de la station de base identifiée par cette information, dans le cas où plusieurs stations de base voisines émettent cette même fréquence balise. Dans le cas de la seconde alternative citée plus haut, le mobile se synchronise sur la fréquence balise Fbp, p compris entre 1 et P, de la liste de la mémoire 13 qui est associée à celui des premiers niveaux de réception mesurés qui est le plus élevé. Cette fréquence balise Fbp peut correspondre à plusieurs stations de base voisines, et l'information de synchronisation Sbp est utilisée selon l'invention dans le mobile lors de la phase de synchronisation pour sélectionner rapidement celle de ces stations de base qui correspond à la station de base dont la fréquence balise Fbp a été mémorisée dans la mémoire 13. Une réduction de la durée de rattachement du mobile 1' à une station de base est ainsi obtenue. En pratique, cette information Sbp peut être sous une autre forme, telle qu'une différence de marche temporelle relative.

## Revendications

1. Procédé pour réduire la durée d'une phase de rattachement d'un mobile (1) à une station de base d'un réseau d'abonnement constituant un sous-réseau d'un réseau de radiocommunications, ledit procédé comprenant
(a1)- le stockage d'une première liste de fréquences balises qui sont émises par des stations de base respectives appartenant à une zone géographique dans laquelle est inclus le mobile (1), et
(b1)- lors de la phase de rattachement, la mesure par le mobile (1) d'un premier niveau de réception respectif pour chacune des fréquences balises définie dans ledit réseau de radiocommunications,
**caractérisé en ce qu'**il comprend, en outre,
(a2)- le stockage d'une seconde liste de fréquences balises et de seconds niveaux de réception respectivement associés auxdites fréquences balises de cette seconde liste et mesurés par le mobile, les seconds niveaux correspondant à des niveaux de puissance maximaux de réception par le mobile, et
(b2)- lors de la phase de rattachement, la comparaison (12) desdits premier et second niveaux de réception pour chacune desdites fréquences balises de la seconde liste, et de laquelle comparaison il résulte l'une des deux alternatives suivantes:
si pour chacune desdites fréquences balises de la seconde liste, lesdits premier et second niveaux de réception sont sensiblement identiques, la synchronisation du mobile sur la fréquence balise de la première liste qui a le premier niveau réception qui est le plus élevé,
si pour au moins l'une desdites fréquences balises de la seconde liste, lesdits premier et second niveaux de réception sont sensiblement différents, la synchronisation du mobile (1) sur chacune des fréquences balises parmi toutes les fréquences balises définies dans ledit réseau de radiocommunications, par ordre décroissant de premier niveau de réception, jusqu'à réception par le mobile de données véhiculées par l'une desdites fréquences balises parmi toutes les fréquences balises définies dans ledit réseau de radiocommunications, qui identifient ladite une des fréquences balises comme étant générée par une station de base dudit réseau d'abonnement donné.

2. Procédé conforme à la revendication 1, **caractérisé en ce que** ladite première liste de fréquences balises, émises par des stations de base respectives appartenant à une zone géographique dans laquelle est inclus le mobile, est diffusée périodiquement par ledit réseau d'abonnement et reçue par le mobile lorsqu'il est rattaché à une station de base de ce réseau d'abonnement.

3. Procédé conforme à la revendication 1 ou 2, **caractérisé en ce que** ladite première liste est stockée dans une mémoire (20) d'un support amovible (2) enfichable dans ledit mobile (1).

4. Procédé conforme à l'une quelconque des revendications 1 à 3, **caractérisé en ce que** ladite seconde liste est stockée dans une mémoire (13) de type à accès aléatoire qui est incluse dans le mobile (1) et qui est maintenue activée même lorsque le mobile (1) est mis hors tension.

5. Mobile (1) pour la mise en oeuvre du procédé conforme à l'une quelconque des revendications 1 à 4, comprenant
- une chaîne de traitement d'émission/réception (10) pour mesurer des niveaux de réception respectifs pour des fréquences balises reçues, et une mémoire (11) pour stocker les premiers niveaux de réception respectifs des fréquences balises définies dans ledit réseau de radiocommunications,
**caractérisé en ce qu'**il comprend:
- un comparateur (12) pour comparer lesdits premier et second niveaux de réception pour chacune desdites fréquences balises de la seconde liste, lesdits seconds niveaux de réception respectifs pour lesdites fréquences balises de la seconde liste étant stockés dans une mémoire permanente (13) dudit mobile (1), et des moyens dans ladite chaîne (10) pour
synchroniser ledit mobile sur la fréquence balise de la première liste qui est associée à celui des premiers niveaux de réception qui est le plus élevé, si pour chacune desdites fréquences balises de la seconde liste, lesdits premier et second niveaux de réception sont sensiblement identiques, et
synchroniser ledit mobile (1) sur chacune des fréquences balises parmi toutes les fréquences balises définies dans ledit réseau de radiocommunications, par ordre décroissant de premier niveau de réception, jusqu'à réception par le mobile de données véhiculées par l'une desdites fréquences balises parmi toutes les fréquences balises définies dans ledit réseau de radiocommunications, qui identifient ladite une des fréquences balises comme étant générée par une station de base dudit réseau d'abonnement donné, si pour au moins l'une desdites fréquences balises de la seconde liste, lesdits premier et second niveaux de réception sont sensiblement différents.

6. Procédé pour réduire la durée d'une phase de rattachement d'un mobile (1') à une station de base d'un réseau d'abonnement constituant un sous-réseau d'un réseau de radiocommunications, ledit procédé comprenant:
- lors de la phase de rattachement, la mesure par le mobile (1) d'un premier niveau de réception respectif pour chacune des fréquences balises définie dans ledit réseau de radiocommunications,
**caractérisé en ce qu'**il comprend, en outre,
- le stockage d'une liste de fréquences balises (Fbp) chacune associée à un second niveau de réception repectif (Cbp) mesuré par le mobile et à une information de synchronisation respective, lesdits seconds niveaux correspondant à des niveaux de puissance maximaux de réception par le mobile, et
- lors de la phase de rattachement, la comparaison (12) desdits premier et second niveaux de réception pour chacune desdites fréquences balises de la liste, et de laquelle comparaison il résulte l'une des deux alternatives suivantes:
si pour chacune desdites fréquences balises de la liste, lesdits premier et second niveaux de réception sont sensiblement identiques, la synchronisation du mobile sur la fréquence balise de la liste qui a le niveau réception qui est le plus élevé, en fonction de l'information de synchronisation associée à cette fréquence balise de la première liste qui a le niveau réception qui est le plus élevé,
si pour au moins l'une desdites fréquences balises de la liste, lesdits premier et second niveaux de réception sont sensiblement différents, la synchronisation du mobile (1) sur chacune des fréquences balises parmi toutes les fréquences balises définies dans ledit réseau de radiocommunications, par ordre décroissant de premier niveau de réception, jusqu'à réception par le mobile de données véhiculées par l'une desdites fréquences balises parmi toutes les fréquences balises définies dans ledit réseau de radiocommunications, qui identifient ladite une des fréquences balises comme étant générée par une station de base dudit réseau d'abonnement donné.

7. Procédé confrme à la revendication 6, **caractérisé en ce que** ladite information de synchronisation consiste en une information d'identité de station de base.

8. Procédé conforme à la revendication 6 ou 7, **caractérisé en ce que** ladite liste est stockée dans une mémoire (13) de type à accès aléatoire qui est incluse dans le mobile (1) et qui est maintenue activée même lorsque le mobile (1) est mis hors tension.

## Patentansprüche

1. Verfahren zum Verkürzen einer Anschlussphase einer Mobilstation (1) an eine Basisstation eines Teilnehmernetzes, das ein Unternetz eines Funkkommunikationsnetzes darstellt, welches umfasst:
(a1) das Speichern einer ersten Liste von Kennzeichenfrequenzen, die jeweils von Basisstationen gesendet werden, die zu einer geographischen Zone gehören, in der sich die Mobilstation (1) befindet, und
(b1) in der Anschlussphase das Messen jeweils eines ersten Empfangspegels für jede der in dem Funkkommunikationsnetz definierten Kennzeichenfrequenzen durch die Basisstation (1),
**dadurch gekennzeichnet, dass** es ferner umfasst:
(a2) das Speichern einer zweiten Liste von Kennzeichenfrequenzen und von zweiten Empfangspegeln, die jeweils den Kennzeichenfrequenzen dieser zweiten Liste zugeordnet und von der Mobilstation gemessen werden, wobei die zweiten Pegel maximalen Leistungspegeln des Empfanges durch die Mobilstation entsprechen, und
(b2) in der Anschlussphase Vergleichen (12) der ersten und zweiten Empfangspegel für jede der Kennzeichenfrequenzen der Zeichenliste, wobei aus dem Vergleich eine der zwei folgenden Alternativen resultiert:
wenn für jede der Kennzeichenfrequenzen der zweiten Liste die ersten und zweiten Empfangspegel im Wesentlichen gleich sind, Synchronisieren der Mobilstation auf die Kennzeichenfrequenz der ersten Liste, die den höchsten ersten Empfangspegel hat,
wenn für wenigstens eine der Kennzeichenfrequenzen der zweiten Liste die ersten und zweiten Empfangspegel deutlich unterschiedlich sind, Synchronisieren der Mobilstation (1) auf jede der Kennzeichenfrequenzen unter allen in dem Funkkommunikationsnetz definierten Kennzeichenfrequenzen in abnehmender Reihenfolge des ersten Empfangspegels, bis die Mobilstation von einer der Kennzeichenfrequenzen unter allen in dem Funkkommunikationsnetz definierten Kennzeichenfrequenzen beförderte Daten empfängt, die diese eine Kennzeichenfrequenz als von einer Basisstation des besagten Teilnehmernetzes erzeugt ausweisen.

2. Verfahren nach Anspruch 1, **dadurch gekennzeichnet, dass** die erste Liste der Kennzeichenfrequenzen, die von den jeweils zu einer geographischen Zone, in der sich die Mobilstation befindet, gehörenden Basisstationen gesendet werden, periodisch von dem Teilnehmernetz verbreitet und von der Mobilstation empfangen wird, wenn sie an eine Basisstation dieses Teilnehmernetzes angeschlossen ist.

3. Verfahren nach Anspruch 1 oder 2, **dadurch gekennzeichnet, dass** die erste Liste in einem Speicher (20) eines entfernbaren, in die Mobilstaticn (1) einsteckbaren Trägers (2) gespeichert wird.

4. Verfahren nach einem beliebigen der Ansprüche 1 bis 3, **dadurch gekennzeichnet, dass** die zweite Liste in einem Speicher (13) mit wahlfreiem Zugriff gespeichert wird, der in der Mobilstation (1) enthalten ist und aktiviert gehalten wird, auch wenn die Mobilstation (1) ausgeschaltet ist.

5. Mobilstation (1) für die Durchführung des Verfahrens nach einem beliebigen der Ansprüche 1 bis 4, mit
- einer Sende-Empfangsverarbeitungskette (10) zum Messen der jeweiligen Empfangspegel für empfangene Kennzeichenfrequenzen und einem Speicher (11) zum Speichern der jeweiligen ersten Empfangspegel der in dem Funkkommunikationsnetz definierten Kennzeichenfrequenzen, **dadurch gekennzeichnet, dass** sie umfasst:
- einen Komparator (12) zum Vergleichen der ersten und zweiten Empfangspegel für jede der Kennzeichenfrequenzen der zweiten Liste, wobei die zweiten Empfangspegel für die Kennzeichenfrequenzen der zweiten Liste jeweils in einem permanenten Speicher (13) der Mobilstation (1) gespeichert sind, und mit Mitteln in der Kette (10) zum
- Synchronisieren der Mobilstation auf diejenige Kennzeichenfrequenz der ersten Liste, die dem höchsten der ersten Empfangspegel zugeordnet ist, wenn für jede der Kennzeichenfrequenzen der zweiten Liste die ersten und zweiten Empfangspegel im Wesentlichen identisch sind, und
- Synchronisieren der Mobilstation (1) auf jede der Kennzeichenfrequenzen unter allen in dem Funkkommunikationsnetz definierten Kennzeichenfrequenzen in abnehmender Reihenfolge ihres ersten Empfangspegels bis zum Empfang von durch diese eine Kennzeichenfrequenz unter allen in dem Funkkommunikationsnetz definierten Kennzeichenfrequenzen beförderten Daten durch die Mobilstation, die diese eine Kennzeichenfrequenz als von einer Basisstation des gegebenen Teilnehmernetzes erzeugt ausweisen, wenn für wenigstens eine der Kennzeichenfrequenzen der zweiten Liste die ersten und zweiten Empfangspegel deutlich unterschiedlich sind

6. Verfahren zum Verkürzen einer Anschlussphase einer Mobilstation (1') an eine Basisstation eines Teilnehmernetzes, die ein Unternetz eines Funkkommunikationsnetzes darstellt, wobei das Verfahren
- in der Anschlussphase jeweils das Messen eines ersten Empfangspegels für jede der in dem Funkkommunikationssystem definierten Kennzeichenfrequenzen
umfasst, **dadurch gekennzeichnet, dass** es ferner umfasst:
- das Speichern einer Liste von Kennzeichenfrequenzen (Fbp), jeweils in Verbindung mit einem von der Mobilstation gemessenen zweiten Empfangspegel (Cbp) und jeweils einer Synchronisationsinformation, wobei die zweiten Empfangspegel maximalen Leistungspegeln des Empfangs durch die Mobilstation entsprechen, und
- in der Anschlussphase Vergleichen (12) der ersten und zweiten Empfangspegel für jede der Kennzeichenfrequenzen der Liste, wobei aus dem Vergleich eine der zwei folgenden Alternativen resultiert:
wenn für jede der Kennzeichenfrequenzen der Liste die ersten und zweiten Empfangspegel im Wesentlichen identisch sind, Synchronisieren der Mobilstation auf diejenige Kennzeichenfrequenz der Liste, die den höchsten Empfangspegel hat, in Abhängigkeit von der dieser Kennzeichenfrequenz der ersten Liste mit dem höchsten Empfangspegel zugeordneten Synchronisationsinformation,
wenn für wenigstens eine der Kennzeichenfrequenzen der Liste die ersten und zweiten Empfangspegel deutlich unterschiedlich sind, Synchronisieren der Mobilstation (1) auf jede der Kennzeichenfrequenzen unter allen in dem Funkkommunikationsnetz definierten Kennzeichenfrequenzen in abnehmender Reihenfolge des ersten Empfangspegels bis zum Empfang von über eine der Kennzeichenfrequenzen unter allen in dem Funkkommunikationsnetz definierten Kennzeichenfrequenzen beförderten Daten durch die Mobilstation, die diese eine Kennzeichenfrequenz als von einer Basisstation des gegebenen Teilnehmernetzes erzeugt ausweisen.

7. Verfahren nach Anspruch 6, **dadurch gekennzeichnet, dass** die Synchronisationsinformation aus einer Information über die Identität der Basisstation besteht.

8. Verfahren nach Anspruch 6 oder 7, **dadurch gekennzeichnet, dass** die Liste in einem Speicher (13) mit wahlfreiem Zugriff gespeichert wird, der in der Mobilstation (1) enthalten ist und aktiviert gehalten wird, auch wenn die Mobilstation (1) ausgeschaltet ist.

## Claims

1. Method for reducing the duration of a phase for connecting a mobile (1) to a base station of a network constituting a subnetwork of a radio communication network, said method comprising:
(a1) - storing a first list of control frequencies transmitted by respective base stations of a geographical area in which the mobile (1) is located, and
(b1) - during the connection phase, measurement by the mobile (1) of a respective first receive level for each of the control frequencies defined in said radio communication network,
**characterized in that** it comprises
(a2) - storing a second list of control frequencies and second receive levels respectively associated with said control frequencies of said second list and measured by the mobile, the second levels corresponding to maximal power levels received by the mobile, and
(b2) - during the connection phase, comparing (12) said first and second receive levels for each of said control frequencies from the second list, which comparison has the following two possible outcomes:
if for each of said control frequencies of the second list said first and second receive levels are substantially identical, synchronization of the mobile to the control frequency from the first list having the highest first receive level,
if for at least one of said control frequencies from the second list said first and second receive levels are significantly different, synchronization of the mobile (1) to each of the control frequencies defined in said radio communication network, in decreasing first receive level order, until the mobile receives data conveyed by one of all the control frequencies defined in said radio communication network which identifies said one control frequency as being generated by a base station of said given network.

2. Method according to claim 1 **characterized in that** said first list of control frequencies transmitted by respective base stations of a geographical area in which the mobile is located is transmitted periodically by said network and received by the mobile when it is connected to a base station of that network.

3. Method according to claim 1 or claim 2 **characterized in that** said first list is stored in a memory (20) of a removable medium (2) that can be plugged into said mobile (1).

4. Method according to any of claims 1 to 3 **characterized in that** said second list is stored in a random access memory (13) included in the mobile (1) and powered even when the mobile (1) is switched off.

5. Mobile (1) for implementing the method according to any of claims 1 to 4, comprising
- a transmit/receive processing subsystem (10) for measuring respective receive levels for receive control frequencies and a memory (11) for storing respective first receive levels of the control frequencies defined in said radio communication network,
**characterized in that** it comprises
- a comparator (12) for comparing said first and second receive levels for each of said control frequencies from the second list, said respective second receive levels for said control frequencies from the second list being stored in a nonvolatile memory (13) of said mobile (1), and means in said subsystem (10) for:
synchronizing said mobile to the control frequency from the first list that is associated with the highest first receive level if for each of said control frequencies from the second list said first and second receive levels are substantially identical, and
synchronizing said mobile (1) to each of the control frequencies defined in said radio communication network, in decreasing first receive level order, until the mobile receives data conveyed by one of all said control frequencies defined in said radio communication network which identifies said one control frequency as being that generated by a base station of said given network if, for at least one of said control frequencies from the second list, said first and second receive levels are significantly different.

6. Method for reducing the duration of a phase for connecting a mobile (1') to a base station of a network constituting a subnetwork of a radio communication network, said method comprising:
- during the connection phase, measurement by the mobile (1) of a respective first receive level for each of the control frequencies defined in said radio communication network,
**characterized in that** it also comprises
- storing a list of control frequencies (Fbp) each associated with a respective second receive level (Cbp) measured by the mobile and a respective synchronization code, said second levels corresponding to maximal power levels received by the mobile, and
- during the connection phase, comparison (12) of said first and second receive levels for each of said control frequencies from the list, which comparison has the following two possible outcomes:
if for each of said control frequencies from the list said first and second receive levels are substantially identical, synchronization of the mobile to the control frequency from the list with the highest receive level, based on the synchronization code associated with that control frequency from the first list having the highest receive level,
if, for at least one of said control frequencies from the list, said first and second receive levels are significantly different, synchronization of the mobile (1) to each of the control frequencies defined in said radio communication network, in decreasing first receive level order, until the mobile receives data conveyed by one of all said control frequencies defined in said radio communication network that identifies said one control frequency as being generated by a base station of said given network.

7. Method according to claim 6 **characterized in that** said synchronization code comprises a base station identification code.

8. Method according to claim 6 or claim 7 **characterized in that** said list is stored in a random access memory (13) included in the mobile (1) and which is powered even when the mobile (1) is switched off.
